# EUROPÄISCHE PATENTSCHRIFT

(11) **EP 1 812 933 B1**
(45) Veröffentlichungstag und Bekanntmachung des Hinweises auf die Patenterteilung: **09.02.2011**
(21) Anmeldenummer: 05799631.6
(22) Anmeldetag: 21.10.2005
(51) Int. Cl.: G21B 1/13

(54) **MONOBLOCK KÜHLEINRICHTUNGSKOMPONENTE**
MONOBLOCK COOLING DEVICE COMPONENT
COMPOSANTS MONOBLOC D'UN DISPOSITIF DE REFROIDISSEMENT

(30) Priorität: 27.10.2004 AT 7802004 U
(43) Veröffentlichungstag der Anmeldung: 01.08.2007
(73) Patentinhaber: PLANSEE SE, 6600 Reutte (AT)
(72) Erfinder: SCHEDLER, Bertram, A-6600 Reutte (AT); SCHEDLE, Dietmar, A-6600 Reutte (AT); SCHEIBER, Karl-Heinz, A-6600 Breitenwang (AT); HUBER, Thomas, A-6600 Lechaschau (AT); FRIEDRICH, Thomas, 87642 Halblech (DE); ZABERNIG, Anton, A-6600 Reutte (AT); FRIEDLE, Hans-Dieter, A-6651 Häselgehr (AT)
(86) Internationale Anmeldenummer: PCT/AT2005/000418
(87) Internationale Veröffentlichungsnummer: WO 2006/045131

(56) Entgegenhaltungen:
- US-A- 5 740 955
- US-A1- 2004 195 296
- PIZZUTO A ET AL: "The outline design of the ITER divertor outboard vertical target dump plate and wing" FUSION TECHNOLOGY 1996. PROCEEDINGS OF THE 19TH SYMPOSIUM ON FUSION TECHNOLOGY ELSEVIER AMSTERDAM, NETHERLANDS, Bd. 1, 1997, Seiten 291-294 vol.1, XP008072224 ISBN: 0-444-82762-5
- MEROLA M ET AL: "European development of carbon armoured plasma facing components for ITER" PHYSICA SCRIPTA VOLUME T R. SWEDISH ACAD. SCI SWEDEN, Bd. T91, 2001, Seiten 104-109, XP002410044 ISSN: 0281-1847

## Beschreibung

Die Erfindung betrifft eine Kühleinrichtungskomponente mit einer Durchführung zur Kühlmittelführung, die zumindest einen Hitzeschild aus Wolfram, einer Wolframlegierung, einem grafitischen Werkstoff oder einem karbidischen Werkstoff umfasst.

Ein typisches Beispiel für den Einsatz derartiger Kühleinrichtungskomponenten sind Erste Wand Komponenten für Fusionsreaktoren, wie beispielsweise Divertor und Limiter, die höchsten Belastungen von über 10 mW / m² ausgesetzt sind. Der dem Plasma ausgesetzte Bereich wird als Hitzeschild, die dem Plasma ausgesetzte Komponente als PFC (Plasma Facing Component) und der dem Plasma ausgesetzte Werkstoff als PFM (Plasma Facing Material) bezeichnet. PFMs müssen Plasma kompatibel sein, eine hohe Resistenz gegenüber physikalischem und chemischem Sputtern aufweisen, einen hohen Schmelzpunkt / Sublimationspunkt besitzen und gegenüber Thermoschock möglichst beständig sein. Daneben müssen sie noch eine hohe thermische Leitfähigkeit, geringe Neutronen-Aktivierbarkeit und ausreichende Festigkeit / Bruchzähigkeit aufweisen, bei guter Verfügbarkeit und akzeptablen Kosten. Wolfram, Wolframlegierungen (z.B. W-1 Gew.%La₂O₃), grafitische Werkstoffe (z.B. faserverstärkter Grafit) und karbidische Werkstoffe (z.B. Borkarbid) erfüllen dieses vielfältige und zum Teil gegenläufige Anforderungsprofil am besten. Da die Energieströme über einen längeren Zeitraum auf diese Komponenten einwirken, werden derartige Kühleinrichtungskomponenten typischerweise aktiv gekühlt. Die Wärmeabfuhr wird durch Wärmesenken, beispielsweise aus Kupfer oder Kupferlegierungen unterstützt, die mit dem PFM üblicherweise formschlüssig verbunden sind.

Kühleinrichtungskomponenten können mit unterschiedlichem Design ausgeführt werden (siehe z.B. Pizzuro et al. - Fusion Technology - Bd1, 1997 - Seilen 291-294, vol. 1). Es wird dabei zwischen Flachziegel-, Sattel- und Monoblockdesign unterschieden.

Wird ein Ziegel aus PFM mit planer Verbindungsfläche mit der Kühlmittel-durchflossenen Wärmesenke verbunden, spricht man von einem Flachziegel-Design. Beim Sattel-Design wird ein Körper aus PFM mit halbkreisförmiger Ausnehmung mit einer rohrförmig ausgeführten Wärmesenke verbunden. Die Wärmesenke hat dabei jeweils die Funktion, den thermischen Kontakt zwischen der Wärmeeintragseite und dem Kühlmedium herzustellen und ist dabei zyklischen, thermisch induzierten Lasten ausgesetzt, die sich aus dem Temperaturgradienten und den unterschiedlichen Ausdehnungskoeffizienten der Fügepartner ergeben.

Beim Monoblock-Design wird ein Kühlwasser führendes Rohr vom Hitzeschild aus PFM, der eine geschlossene Durchführung aufweist, umhüllt. Während beim Sattel- und Flachziegeldesign sich einzelne Hitzeschildkomponenten aufgrund der zyklischen, thermomechanischen Belastung während des Einsatzes von der Wärmesenke ablösen können, ist ein Verlust von Hitzeschildkomponenten beim Monoblockdesign aus geometrischen Gründen ausgeschlossen. Der Nachteil des Monoblock-Designs ist jedoch, dass nicht nur thermisch induzierte, sondern auch zusätzlich auftretende mechanische Lasten vom PFM zu ertragen sind. Solche zusätzlichen, mechanischen Lasten können über elektromagnetisch induzierte Ströme erzeugt werden, die in den Komponenten fließen und mit dem Magnetfeld der Umgebung in Wechselwirkung treten. Dabei können hochfrequente Beschleunigungskräfte auftreten, die von den beteiligten Strukturen übertragen werden müssen. Diese Kräfte werden beim Flachziegel- und Sattel-Design über Strukturmaterialien, beim Monoblock-Design jedoch vom PFM übertragen. Wolfram, Wolframlegierungen, grafitische und karbidische Werkstoffe weisen jedoch eine geringe Bruchzähigkeit auf. Im Falle von faserverstärkten Grafiten kommt noch die vergleichsweise geringe Festigkeit dazu. Zusätzlich tritt während des Einsatzes Neutronenversprödung auf, wodurch es zu einer weiteren Erhöhung der Empfindlichkeit dieser Werkstoffe gegenüber Risseinleitung kommt.

Trotz jahrelanger aufwendiger Entwicklungstätigkeit auf dem Gebiet von Erste-Wand Komponenten erfüllen die bis dato vorliegenden Bauteile das Anforderungsprofil nicht in optimaler Weise. Dies ist mit ein Grund, dass die großtechnische Umsetzung der Fusionstechnik nach wie vor in weiter Ferne liegt.

Aufgabe der Erfindung ist es daher eine Kühleinrichtungskomponente im Monoblock-Design (PFM Hitzeschild mit Durchführung) bereit zu stellen, die den Anforderungen, sowohl aus physikalischen als auch mechanischen Beanspruchungen resultierend, in geeigneter Weise gereicht wird.

Gelöst wird diese Aufgabe durch eine Kühleinrichtungskomponente, die zumindest einen Hitzeschild aus Wolfram, einer Wolframlegierung, einem grafitischen Werkstoff oder einem karbidischen Werkstoff, der mit einer Durchführung versehen ist, zumindest ein Strukturteil aus einem Werkstoff mit einer Zugfestigkeit bei Raumtemperatur > 300 MPa und einem spezifischen elektrischen Widerstand > 0,04 Ohm mm² m⁻¹ und zumindest ein Kühlrohr zur Kühlmittelführung umfasst, wobei Hitzeschild und Strukturteil metallurgisch verbunden sind.

Die erfindungsgemäße Kühleinrichtungskomponente erfüllt das in der Beschreibung wiedergegebene vielfältige und teilweise gegenläufige Anforderungsprofil in idealer Weise und löst damit in einfacher Weise ein seit langem bestehendes Problem. Es ist hat sich gezeigt, dass bei einer Festigkeit des Strukturteiles > 300 MPa und einem spezifischen elektrischen Widerstand > 0,04 Ohm mm² m⁻¹ sowohl eine Risseinleitung im spröden PFM, als auch ein Verlust des Hitzeschildes vermieden werden kann.

Der Hitzeschild weist bevorzugt eine geschlossene Durchführung, z.B. In Form einer durchgehenden Bohrung auf. Bevorzugte Werkstoffe für den Hitzeschild sind CFC (Kohlefaser-verstärkter Grafit), Rein-Wolfram und W-1 Gew.%La₂O₃. Weiters ist es günstig, dass bei einer projizierten Länge I und einer projizierten Breite b des Hitzeschildes die projizierte Fügefläche zwischen Hitzeschild und Strukturteil > 0,3·(l·b) ist Unter projizierter Länge, Breite und Fläche ist dabei die Senkrechtprojektion auf eine ebene Fläche zu verstehen. Bei einer plan bzw. geradlinig ausgeführten Strecke / Fläche, entspricht die Ist-Länge, -Breite und -Fläche der projizierten Länge, Breite und Fläche. Bei einer gekrümmt ausgeführten Strecke / Fläche ist die projizierte Strecke / Fläche entsprechend kleiner. Um bei höchstbelasteten Komponenten eine über einen langen Belastungszeitraum reichende Bauteilsicherheit zu gewährleisten, ist eine projizierte Fügefläche > 0,8 (l·b) vorteilhaft.

Weiters erweist sich eine relative magnetische Permeabilität des Strukturteiles < 1,2 als günstig. Besonders geeignete Werkstoffe für den Strukturteil sind dabei Fe-, Ti- und Ni-Basiswerkstoffe, die die oben angeführten physikalischen Eigenschaften aufweisen. Besonders hervorzuheben sind dabei austenitische, ferritische, ferritisch-martenisitische Stähle und ODS (oxide-dispersion-strengthened) Werkstoffe.

Um die Spannungen im Werkstoffverbund zu reduzieren, ist es vorteilhaft, zwischen Hitzeschild und Strukturteil eine Zwischenschicht, bevorzugt mit einer Stärke 0,01 bis 5mm, aus einem duktilen Werkstoff mit einer Härte < 300 HV einzubringen, wobei die Zwischenschicht in besonders vorteilhafter Weise eine Entlastungskerbe aufweist. Es hat sich als günstig erwiesen, wenn die Zwischenschicht aus Kupfer oder einer Kupferlegierung besteht.

Auch eine Strukturierung der Fügefläche, bevorzugt Hüzeschild-seitig, beispielsweise mittels Laser, verringert die Rissgefahr.

Weitere günstige Ausführungsformen sind ein sich verjüngender Querschnitt des Strukturteiles mit zunehmender Entfernung von der Fügefläche, eine plane Ausführung der Fügefläche und das Einbringen einer Fase oder einer Verrundung im Randbereich der Fügefläche / Strukturteil.

Die metallurgische Verbindung zwischen dem Hitzeschild und dem Strukturteil kann beilspielsweise durch Löten, gemeinsames und gleichzeitiges Hintergießen beider Verbindungspartner oder durch Hintergießen des Hitzeschilds mit einer dicken, duktilen Schicht, beispielsweise aus Kupfer oder Aluminium, gefolgt von einem anschließenden Verbindungsprozess durch Löten, Elektronenstrahlschweißen oder beispielsweise Diffusionsschweißen erfolgen. Die Verbindung des Kühlrohres mit dem Hitzeschild kann je nach Ausführungsform vor bzw. nach dem Verbindungsprozess mit dem Strukturteil erfolgen.

Dadurch ergeben sich folgende Herstelivarianten, wobei sich die Möglichkeiten nicht auf die angegebenen Beispiele reduzieren.

### Variante 1

Hintergießen der Durchführung und einer Seitenfläche des Hitzeschildes mit einem duktilen Material. Dieser Vorgang kann je nach Auswahl des duktilen Materials in einem oder in zwei getrennten Prozessschritten erfolgen. Danach erfolgt das Verbinden des Rohres mit der zuvor beschriebenen Komponente. Die mit dem duktilen Material versehene Seitenfläche des Hitzeschildes wird mit dem Strukturteil, beispielsweise mittels Lösten, EB-Schweißen oder HIP (heißisostatisches Pressen) verbunden.

### Variante 2

Die Durchführung und die strukturteilseitige Fläche des Hitzeschildes werden mit einem duktilen Material hintergossen. Dies kann je nach Auswahl des duktilen Materials in einem oder in zwei getrennten Prozessschritten erfolgen. Danach erfolgt das Verbinden der so hergestellten Komponente über die duktile Schicht mit dem Strukturteil (beispielsweise mittels Löten, EB-Schweißen oder HIP). Schritt 1 und Schritt 2 können dabei auch in einem Prozessschritt zusammengefasst werden. In diesem Fall muss der Strukturteil einen höheren Schmelzpunkt als der duktile Werkstoff aufweisen. In weiterer Folge wird das Kühlrohr mit der zuvor beschriebenen Komponente verbunden.

Der Strukturteil wiederum ist vorteilhafterweise form- oder stoffschlüssig mit einem Trägerelement, z.B. aus Stahl, verbunden. Die stoffschlüssige Verbindung kann dabei beispielsweise mittels Schweißen, die formschlüssige Verbindung mittels einer starren Bolzenverbindung über eine oder mehrere Finnen bewerkstelligt werden. Bei im Einsatz auftretenden großen Unterschieden in der Wärmedehnung kann auch eine gleitende mechanische Verbindung günstig.sein, die eine Relativbewegung zwischen Strukturteil und Trägerelement ermöglicht.

Im Folgenden wird die Erfindung durch Figuren und Herstellbeispiele näher erläutert.
Figur 1 zeigt eine erfindungsgemäße Kühleinrichtungskomponente in Draufsicht,
Figur 2 bis Figur 8 im Querschnitt.

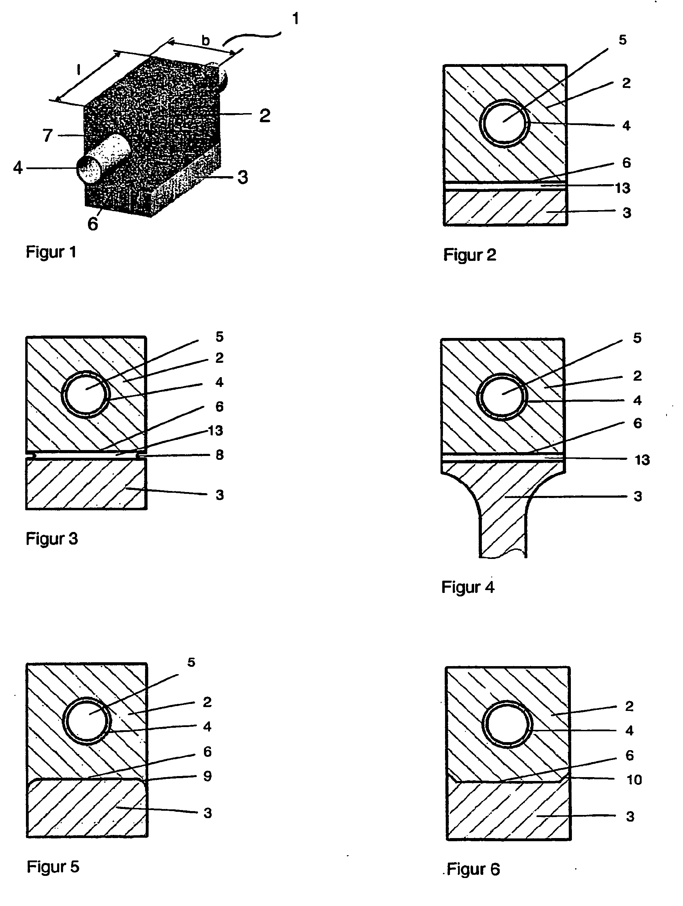

Die Kühleinrichtungskomponente -1- in Figur 1 besteht aus einem Hitzeschild -2-, das stoffschlüssig mit einem Kühlrohr -4- über eine duktile Zwischenschicht -7- verbunden ist. Der Hitzeschild mit der Länge I und der Breite b ist wiederum an dessen Fügefläche (6) mit dem Strukturteil -3- stoffschlüssig verbunden, wobei die projizierte Fügefläche l·b beträgt.

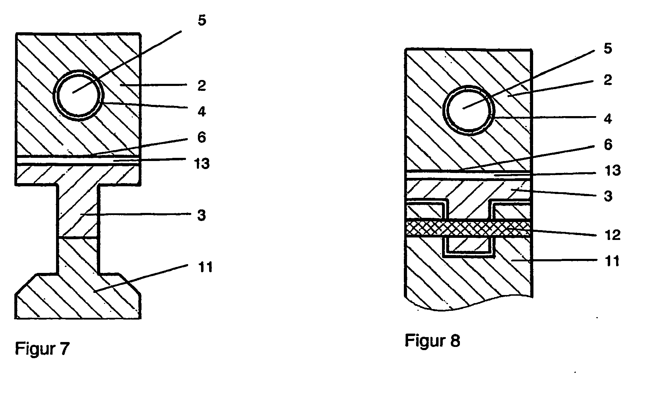

Figur 2 zeigt eine Kühleinrichtungskomponente -1-, bei der Hitzeschild -2- mit dem Strukturteil -3- über eine duktile Zwischenschicht -13- stoffschlüssig verbunden ist. In Figur 3 weist die Zwischenschicht 13 eine Entlastungskerbe -8- auf. Figur 4 zeigt eine Kühleinrichtungskomponente -1-, bei der der Strukturteil -3- einen sich verjüngenden Querschnitt aufweist. Die Randbereiche der Fügefläche -6- sind in Figur 5 mit Radien -9- und in Figur 6 mit Fasen ausgeführt. Radien bzw. Fasen können dabei nach oben oder unten gerichtet sein. Figur 7 wiederum zeigt eine Kühleinrichtungskomponente -1- mit einem stoffschlüssig verbundenen Trägerelement -11-. In Figur 8 ist das Trägerelement -11- formschlüssig mittels Bolzenverbindung -12- mit dem Strukturteil -3- verbunden.

### Beispiel 1

Eine Kühleinrichtungskomponente mit Monoblock-Design und einem Hitzeschild aus kohlefaserverstärktem Grafit (CFC) wurde wie folgt hergestellt: Drei CFC-Blöcke mit einer Abmessung von 28 mm (ex-pitsch Richtung) 25 mm (x-PAN Richtung) und 20 mm (Faserrichtung) wurden mit einer Durchführung, und zwar in Form einer Bohrung mit einem Durchmesser von 14 mm versehen. Anschließend wurde die Innenseite der Bohrung sowie eine Blockseite mit der Dimension 25 x 20 mm mittels Laser strukturiert. In einem folgenden Schritt wurde in die strukturierte Bohrung bzw. auf die strukturierte Blockfläche OFHC-Kupfer durch einen Gießprozess aufgebracht, wobei in der Verbindungsfläche Titan bereitgestellt wurde, um die Benetzung zu gewährleisten. Danach wurde das OFHC-Kupfer auf der Blockfläche und in der Bohrung auf eine Stärke zwischen 0,5 und 1 mm mechanisch abgearbeitet. Danach wurde in die Bohrung jeweils ein Rohr aus einer Kupfer-Chrom-Zirkon-Legierung mit einem Durchmesser von ca. 12 mm eingeführt. An der mit der OFHC-Kupferschicht versehenen Blockseite wurde jeweils ein allseitig mit 5 µm vernickelter Stahlquader mit einer Abmessung von 25 x 20 x 30 mm positioniert. Der so hergestellte Zusammenbau wurde anschließend in einer Stahlkanne platziert. Die Stahlkanne wurde verschweißt, evakuiert und einem HIP-Prozess bei 550°C und 1.000 bar unterzogen. Nach dem Entfernen der Kanne wurde die Kühleinrichtungskomponente mittels Ultraschall geprüft. Die Verbindungsflächen waren fehlerfrei. Anschließend wurde die so hergestellte Kühleinrichtungskomponente bearbeitet und mittels einer Bolzenverbindung gleitend auf einer Stahlstruktur montiert.

### Beispiel 2

Eine Kühleinrichtungskomponente mit Monoblock-Design und einem Hitzeschild aus Wolfram wurde wie folgt hergestellt:

Drei Wolframblöcke mit einer Abmessung von 28 x 25 x 20 mm wurden jeweils mit einer Durchführung, und zwar in Form einer Bohrung mit einem Durchmesser von 14 mm versehen. Die Bohrung und eine 25 x 20 mm Seitenfläche des Wolframblockes wurden mit OFHC-Kupfer hintergossen. Nach dem Gießprozess wurde das OFHC-Kupfer sowohl in der Bohrung, als auch auf der Blockfläche auf eine Stärke zwischen 0,1 und 5 mm mechanisch abgearbeitet. Die so hergestellten Wolframblöcke wurden anschließend auf ein Rohr aus einer Kupfer-Chrom-Zirkon-Legierung aufgefädelt. Auf der mit OFHC-Kupfer versehenen Blockseite wurde jeweils ein allseitig mit 5 µm vernickelter Stahlquader mit einer Abmessung von 25 x 20 x 30 mm positioniert.

Anschließend wurde dieser Zusammenbau in einer Stahlkanne platziert. Die Stahlkanne wurde verschweißt, evakuiert und einem HIP-Prozess bei 550°C und 1.000 bar unterzogen. Nach dem Entfernen der Kanne wurde eine Ultraschallprüfung durchgeführt, die keine Fehistellen erkennen ließ.

Anschließend wurde die so hergestellte Kühleinrichtungskomponente bearbeitet und mittels Elektronenstrahlschweißung auf einer Stahlstruktur fixiert.

## Patentansprüche

1. Kühleinrichtungskomponente (1), die zumindest einen Hitzeschild (2) aus Wolfram, einer Wolframlegierung, einem grafitischen Werkstoff oder einem karbidischen Werkstoff, der mit einer Durchführung (5) versehen ist, zumindest ein Strukturteil (3) aus einem Werkstoff mit einer Zugfestigkeit bei Raumtemperatur > 300 MPa und einem spezifischen elektrischen Widerstand > 0,04 Ohm mm² m⁻¹ und zumindest ein Kühlrohr (4) zur Kühtmittetführung umfasst,
**dadurch gekennzeichnet,**
**dass** Hitzeschild (2) und Strukturteil (3) metallurgisch verbunden sind.

2. Kühleinrihtungskomponente nach Anspruch 1 **dadurch gekennzeichnet, dass** Hitzeschild (2) und Kühlrohr (4) stoffschlüssig verbunden sind.

3. Kühleinrichtungskomponente nach Anspruch 1 oder 2 **dadurch gekennzeichnet, dass** der Hitzeschild (2) eine projizierte Länge 1, eine projizierte Breite b und eine Fügefläche (6) mit dem Strukturteil aufweist, wobei die projizierte Fügefläche (6) > 0,3-(l-b) ist.

4. Kühleinrirhtungskomponente nach Anspruch 3, **dadurch gekennzeichnet, dass** die projizierte Fugefläche (6) > 0,8-(l-b) beträgt.

5. Kühleinrichtungskomponente nach einem der Ansprüche 3 oder 4, **dadurch gekennzeichnet, dass** die Fügefläche (6) plan ausgeführt ist.

6. Kühleinrichtungskomponente nach einem der Ansprüche 3 bis 5, **dadurch gekennzeichnet, dass** die Fügefläche (6) strukturiert ausgeführt ist.

7. Kühleinrichtungskomponente nach einem der Ansprüche 1 bis 6 **dadurch gekennzeichnet, dass** zwischen Hitzeschild (2) und Strukturteil (3) eine Zwischenschicht (13) aus einem duktilen Werkstoff mit einer Härte < 300 HV eingebracht ist

8. Kühleinrichtungskomponente nach Anspruch 7 **dadurch gekennzeichnet, dass** die Zwischenschicht (13) aus einem Kupfer-Basiswerkstoff besteht.

9. Kühleinrichtungskomponente nach einem der Ansprüche 7 oder 8 **dadurch gekennzeichnet, dass** die Zwischenschicht (13) mit einer Entlastungskerbe (8) versehen ist.

10. Kühleinrichtungskomponente nach einem der Ansprüche 7 bis 9 **dadurch gekennzeichnet, dass** die Stärke der Zwischenschicht (13) 0,01 bis 5 mm beträgt.

11. Kühleinrichtungskomponente nach einem der Ansprüche 1 bis 10 **dadurch gekennzeichnet, dass** zwischen Hitzeschild (2) und Kühlrohr (4) eine Zwischenschicht (7) aus einem duktilen Werkstoff mit einer Härte < 300 HV, bevorzugt Kupfer, eingebracht ist.

12. Kühleinrichtungskomponente nach einem der Ansprüche 1 bis 11, **dadurch gekennzeichnet, dass** das Strukturteil (3) mit zunehmender Entfernung von der Fügefläche (6) einen sich verjüngenden Querschnitt aufweist.

13. Kühleinrichtungskomponente nach einem der Ansprüche 1 bis 12, **dadurch gekennzeichnet, dass** das Strukturteil (3) aus einem Fe-, Ti oder Ni-Basiswerkstoff besteht.

14. Kühleinrichtungskomponente nach Anspruch 13, **dadurch gekennzeichnet, dass** das Strukturteil (3) aus einem austenitischen, ferritischen, ferritischmartensitischen Stahl oder einem Oxid-dispersionsverfestigten Werkstoff besteht.

15. Kühleinrichtungskomponente nach einem der Ansprüche 1 bis 14, **dadurch gekennzeichnet, dass** die relative magnetische Permeabilität des Strukturteiles < 1,2 beträgt.

16. Kühleinrichtungskomponente nach einem der Ansprüche 1 bis 15, **dadurch gekennzeichnet, dass** der Hitzeschild (2) und / oder das Strukturteil (3) im Bereich der Fügefläche (6) einen Radius (9) oder eine Fase (10) aufweisen.

17. Kühleinrichtungskomponente nach einem der Ansprüche 1 bis 16, **dadurch gekennzeichnet, dass** die Durchführung (5) als durchgehende Bohrung ausgestaltet ist.

18. Kühleinrichtungskomponente nach einem der Ansprüche 1 bis 17, **dadurch gekennzeichnet, dass** das Kühlrohr (4) aus einem Kupferbasiswerkstoff besteht.

19. Kühleinrichtungskomponente nach einem der Ansprüche 1 bis 18, **dadurch gekennzeichnet, dass** das Strukturteil (3) mit einem Trägerelement (11) stoffschlüssig, bevorzugt einer Schweißung, verbunden ist.

20. Kühleinrichtungskomponente nach einem der Ansprüche 1 bis 18, **dadurch gekennzeichnet, dass** das Strukturteil (3) mit einem Trägerelement (11) formschlüssig, bevorzugt mittels starrer Bolzenverbindung über eine oder mehrere Finnen, verbunden ist.

21. Kühleinrichtungskomponente nach einem der Ansprüche 1 bis 18, **dadurch gekennzeichnet, dass** das Strukturteil (3) mit einem Trägerelement (11) über eine gleitende mechanische Verbindung, bevorzugt mittels Bolzenverbindung, verbunden ist, die eine Relativbewegung zwischen Strukturteil (3) und Trägerelement (11) ermöglicht.

22. Kühleinrichtungskomponente nach einem der Ansprüche 1 bis 21 zur Verwendung als Erste-Wand Bauteil in einem Fusionsreaktor.

23. Kühleinrichtungskomponente nach Anspruch 22 zur Verwendung als Divertor.

## Claims

1. Cooling device component (1) which comprises at least one heat shield (2) made from tungsten, a tungsten alloy, a graphitic material or a carbidic material and provided with a through-hole (5), and which component also comprises at least one structural part (3) made from a material with a tensile strength at room temperature of > 300 MPa and an electrical resistivity of 0.04 Ohm mm²m⁻¹ as well at least one cooling pipe (4) for carrying coolant, **characterized in that**
heat shield (2) and structural part (3) are metallurgically joined to one another.

2. Cooling device component according to Claim 1, **characterized in that** heat shield (2) and cooling pipe (4) are joined to one another.

3. Cooling device component according to Claim 1 or 2, **characterized in that** the heat shield (2) has a projected length 1, a projected width b and a joining area (6) for the structural part, wherein the projected joining area (6) is > 0.3·(l·b).

4. Cooling device component according to Claim 3, **characterized in that** the projected joining area (6) is > 0.8·(l·b).

5. Cooling device component according to either of Claims 3 and 4, **characterized in that** the joining area (6) is planar in form.

6. Cooling device component according to one of Claims 3 to 5, **characterized in that** the joining area (6) is structured in form.

7. Cooling device component according to one of Claims 1 to 6, **characterized in that** an interlayer (13) of a ductile material with a hardness of < 300 HV is introduced between heat shield (2) and structural part (3).

8. Cooling device component according to Claim 7, **characterized in that** the interlayer (13) consists of a copper-based material.

9. Cooling device component according to either of Claims 7 and 8, **characterized in that** the interlayer (13) is provided with a stress-relief notch (8).

10. Cooling device component according to one of Claims 7 to 9, **characterized in that** the thickness of the interlayer (13) is from 0.01 to 5 mm.

11. Cooling device component according to one of Claims 1 to 10, **characterized in that** an interlayer (7) of a ductile material with a hardness of < 300 HV, preferably copper, is introduced between heat shield (2) and cooling pipe (4).

12. Cooling device component according to one of Claims 1 to 11, **characterized in that** the structural part (3) has a cross section which narrows at increasing distance from the joining area (6).

13. Cooling device component according to one of Claims 1 to 12, **characterized in that** the structural part (3) consists of a Fe-, Ti- or Ni-based material.

14. Cooling device component according to Claim 13, **characterized in that** the structural part (3) consists of an austenitic, ferritic, ferritic-martensitic steel or an oxide dispersion strengthened material.

15. Cooling device component according to one of Claims 1 to 14, **characterized in that** the relative magnetic permeability of the structural part is < 1.2.

16. Cooling device component according to one of Claims 1 to 15, **characterized in that** the heat shield (2) and/or the structural part (3) have a radius (9) or a bevel (10) in the region of the joining area (6).

17. Cooling device component according to one of Claims 1 to 16, **characterized in that** the through-hole (5) is formed as a continuous bore.

18. Cooling device component according to one of Claims 1 to 17, **characterized in that** the cooling pipe (4) consists of a copper-based material.

19. Cooling device component according to one of Claims 1 to 18, **characterized in that** the structural part (3) is joined, preferably by means of a weld, to a support element (11).

20. Cooling device component according to one of Claims 1 to 18, **characterized in that** the structural part (3) is mechanically connected, preferably by means of a rigid bolt connection by way of one or more fins, to a support element (11).

21. Cooling device component according to one of Claims 1 to 18, **characterized in that** the structural part (3) is connected to a support element (11) by means of a sliding mechanical connection, preferably by means of a bolt connection, which allows relative movement between structural part (3) and support element (11).

22. Cooling device component according to one of Claims 1 to 21, for use as a first wall component in a fusion reactor.

23. Cooling device component according to Claim 22 for use as a divertor.

## Revendications

1. Composant (1) d'un dispositif de refroidissement, qui comprend au moins un bouclier thermique (2) en tungstène, en alliage de tungstène, en matériau graphitique ou en matériau type carbure où est ménagée une traversée (5), au moins une pièce de structure (3) en un matériau offrant une résistance à la traction > 300 MPa à température ambiante et une résistance électrique spécifique > 0,04 Ohm mm² m⁻¹ et au moins un tube de refroidissement (4) comme conduite de milieu refroidissant,
**caractérisé en ce que** le bouclier thermique (2) et la pièce de structure (3) sont assemblés par métallurgie.

2. Composant d'un dispositif de refroidissement selon la revendication 1, **caractérisé en ce que** le bouclier thermique (2) et le tube de refroidissement (4) sont assemblés par jonction par matériau.

3. Composant d'un dispositif de refroidissement selon la revendication 1 ou 2, **caractérisé en ce que** la longueur projetée 1 du bouclier thermique (2), sa largeur projetée b et sa surface de joint (6) avec la pièce de structure sont telles que la surface de joint projetée (6) > 0,3.(l.b).

4. Composant d'un dispositif de refroidissement selon la revendication 3, **caractérisé en ce que** la surface de joint projetée (6) est > 0,8.(l.b).

5. Composant d'un dispositif de refroidissement selon la revendication 3 ou 4, **caractérisé en ce que** la surface de joint (6) est plane.

6. Composant d'un dispositif de refroidissement selon l'une quelconque des revendications 3 à 5, **caractérisé en ce que** la surface de joint (6) est structurée.

7. Composant d'un dispositif de refroidissement selon l'une quelconque des revendications précédentes, **caractérisé en ce qu'**une couche intermédiaire (13) en matériau ductile d'une dureté < 300 HV est introduite entre le bouclier thermique (2) et la pièce de structure (3).

8. Composant d'un dispositif de refroidissement selon la revendication 7, **caractérisé en ce que** la couche intermédiaire (13) consiste en un matériau à base de cuivre.

9. Composant d'un dispositif de refroidissement selon la revendication 7 ou 8, **caractérisé en ce que** la couche intermédiaire (13) comporte une entaille de décharge (8).

10. Composant d'un dispositif de refroidissement selon l'une quelconque des revendications 7 à 9, **caractérisé en ce que** l'épaisseur de la couche intermédiaire (13) est de 0,01 à 5 mm.

11. Composant d'un dispositif de refroidissement selon l'une quelconque des revendications précédentes, **caractérisé en ce qu'**une couche intermédiaire (7) en matériau ductile d'une dureté < 300 HV, de préférence du cuivre, est introduite entre le bouclier thermique (2) et le tube de refroidissement (4).

12. Composant d'un dispositif de refroidissement selon l'une quelconque des revendications précédentes, **caractérisé en ce que** la section transversale de la pièce de structure (3) diminue lorsque la distance à la surface de joint (6) augmente.

13. Composant d'un dispositif de refroidissement selon l'une quelconque des revendications précédentes, **caractérisé en ce que** la pièce de structure (3) consiste en un matériau à base de Fe, Ti ou Ni.

14. Composant d'un dispositif de refroidissement selon la revendication 13, **caractérisé en ce que** la pièce de structure (3) consiste en un acier austénitique, ferritique, ou ferritique-martensitique, ou en un matériau consolidé par dispersion d'oxydes.

15. Composant d'un dispositif de refroidissement selon l'une quelconque des revendications précédentes, **caractérisé en ce que** la perméabilité magnétique relative de la pièce de structure (3) est < 1,2.

16. Composant d'un dispositif de refroidissement selon l'une quelconque des revendications précédentes, **caractérisé en ce que** le bouclier thermique (2) et/ou la pièce de structure (3) présentent un rayon (9) ou un chanfrein (10) dans la zone de la surface de joint (6).

17. Composant d'un dispositif de refroidissement selon l'une quelconque des revendications précédentes, **caractérisé en ce que** la traversée (5) consiste en un alésage traversant.

18. Composant d'un dispositif de refroidissement selon l'une quelconque des revendications précédentes, **caractérisé en ce que** le tube de refroidissement (4) consiste en un matériau à base cuivre.

19. Composant d'un dispositif de refroidissement selon l'une quelconque des revendications précédentes, **caractérisé en ce que** la pièce de structure (3) est assemblée avec un élément porteur (11) par jonction par matériau, de préférence par soudure.

20. Composant d'un dispositif de refroidissement selon l'une quelconque des revendications 1 à 18, **caractérisé en ce que** la pièce de structure (3) est assemblée avec un élément porteur (11) en engagement positif, de préférence par un assemblage rigide par goujons au moyen d'une ou plusieurs nervures.

21. Composant d'un dispositif de refroidissement selon l'une quelconque des revendications 1 à 18, **caractérisé en ce que** la pièce de structure (3) est assemblée avec un élément porteur (11) au moyen d'un assemblage mécanique coulissant, de préférence par un assemblage par goujons qui permet un déplacement relatif entre la pièce de structure (3) et l'élément porteur (11).

22. Composant d'un dispositif de refroidissement selon l'une quelconque des revendications précédentes, à utiliser comme élément structurel de première paroi dans un réacteur de fusion.

23. Composant d'un dispositif de refroidissement selon la revendication 22, à utiliser comme déflecteur.
